# EUROPÄISCHE PATENTSCHRIFT

(11) **EP 1 961 284 B1**
(45) Veröffentlichungstag und Bekanntmachung des Hinweises auf die Patenterteilung: **14.01.2015**
(21) Anmeldenummer: 08101608.1
(22) Anmeldetag: 13.02.2008
(51) Int. Cl.: A01B 59/00

(54) **Anordnung zur Befestigung eines Oberlenkers einer Dreipunktanbaueinrichtung für landwirtschaftliche Nutzfahrzeuge in einer Außerbetriebsstellung**
Device for fixing an upper link of a three point cultivation device for agricultural commercial vehicles in a not-in-use position
Agencement de fixation d'un bras oscillant supérieur d'un dispositif de construction à trois points pour véhicules utilitaires agricoles dans une position hors service

(30) Priorität: 24.02.2007 DE 102007009137
(43) Veröffentlichungstag der Anmeldung: 27.08.2008
(73) Patentinhaber: Deere & Company, Moline, IL 61265-8098 (US)
(72) Erfinder: Heitlinger, Martin, 76684 Östringen (DE)
(74) Vertreter: Holst, Sönke

(56) Entgegenhaltungen:
- DE-U- 1 974 937
- GB-A- 2 409 395
- US-A- 4 135 731

## Beschreibung

Die Erfindung betrifft eine Anordnung zur Befestigung eines Oberlenkers einer Dreipunktanbaueinrichtung für landwirtschaftliche Nutzfahrzeuge in einer Außerbetriebsstellung, mit einem ersten Halteelement und einem zweiten Halteelement, das um eine Achse schwenkbar am ersten Element angelenkt ist und in eine Haltestellung, in der die Halteelemente einen Oberlenker oder ein damit verbundenes Element festhalten können, und in eine Lösestellung bringbar ist, in der das zweite Halteelement eine Bewegung des Oberlenkers oder des damit verbundenen Elements von der Anordnung hinweg und zu ihr hin ermöglicht.

### Stand der Technik

Oberlenker hydraulischer Dreipunktanbaueinrichtungen an Traktoren werden beispielsweise dann nicht benötigt, wenn sich das landwirtschaftliche Nutzfahrzeug auf einer Transportfahrt befindet, Arbeit mit nicht an der Dreipunktanbaueinrichtung befestigten Geräten erledigt oder ein Anbaugerät lediglich mit den Unterlenkern der Dreipunktanbaueinrichtung angekoppelt ist. Bei manchen Fabrikaten ist es möglich, den Oberlenker abzumontieren und an anderer Stelle des Nutzfahrzeugs zu verstauen, was sich aber als relativ umständlich erweist.

Eine im Stand der Technik bekannte Lösung zur Befestigung eines mechanischen (nicht mit einem Hydraulikzylinder ausgestatteten) Oberlenkers in seiner nach oben verschwenkten Außerbetriebsstellung (Fendt GTA 395) umfasst eine Platte mit einer U-förmigen Aussparung, welche den nach oben verschenkten Oberlenker aufnimmt. Ein Haken ist um die Hochachse schwenkbar an der Platte angelenkt und durch Federkraft in eine Position vorgespannt, in der die Aussparung in der Platte und der Haken einen Kreis bilden. Der Haken umschließt den Oberlenker in dessen Außerbetriebsstellung. Die Feder ist derart schwach bemessen, dass der Oberlenker nach unten verschwenkt werden kann, wobei der Haken gegen die Kraft der Feder nach hinten bewegt wird und den Oberlenker freigibt. Eine derartige Anordnung ist aus DE 19 74 937 U bekannt.

### Aufgabenstellung

Als nachteilig wird bei dem beschriebenen Stand der Technik mit der Platte und dem Haken angesehen, dass es einem Bediener ohne weiteres möglich ist, den Oberlenker mit einer Hand aus der Fixierung zu lösen. Wird der Oberlenker nicht richtig festgehalten, kann er nach unten fallen und dort Komponenten des Traktors oder Anbaugeräts beschädigen oder den Bediener verletzen.

Die der Erfindung zu Grunde liegende Aufgabe wird darin gesehen, eine Anordnung zur Befestigung eines Oberlenkers einer Dreipunktanbaueinrichtung in seiner Außerbetriebsstellung bereitzustellen, die sich durch verbesserte Bedienungssicherheit auszeichnet.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein landwirtschaftliches Nutzfahrzeug, z. B. ein Traktor, weist eine insbesondere hydraulische Dreipunktanbaueinrichtung mit einem Oberlenker und zwei Unterlenkern auf. Der Oberlenker kann aus seiner Betriebsstellung, in der er sich in der Regel zumindest näherungsweise horizontal erstreckt, in eine Außerbetriebsstellung angehoben und dort durch die erfindungsgemäße Anordnung am Traktor befestigt werden. Die Anordnung umfasst ein erstes Halteelement, das direkt oder indirekt am Rahmen des Traktors befestigbar oder befestigt ist. Ein zweites Halteelement ist schwenkbar mit dem ersten Halteelement verbunden, in der Regel um eine sich etwa vertikal erstreckende Achse. Das zweite Halteelement kann somit in eine Halterungsposition verbracht werden, in der es gemeinsam mit dem ersten Halteelement einen Kreis oder eine andere geeignete Öffnung bildet, in dem der Oberlenker oder ein damit verbundenes Element, z. B. ein daran befestigtes Rohr, Aufnahme finden. Das zweite Halteelement kann außerdem in eine Löseposition verdreht werden, in der der Oberlenker oder das damit verbundene Element freigegeben werden und in der der Oberlenker wieder nach unten in die Betriebsstellung verschwenkt werden kann.

Eine lösbare Arretierungseinrichtung ist ausgelegt, das zweite Halteelement am ersten Halteelement zu arretieren, wenn sich das zweite Halteelement in der Haltestellung befindet, und verhindert im arretierenden Zustand, dass sich das zweite Halteelement in die Lösestellung bewegt. Die beiden Halteelemente nehmen den Oberlenker oder das damit verbundene Rohr in einer Weise auf, dass der Oberlenker bzw. das damit verbundene Element durch einen Bediener von Hand gegen die Wirkung der Schwerkraft in Richtung auf das erste Halteelement bewegt werden kann. Die Arretierungseinrichtung ist nicht lösbar, wenn der Oberlenker oder das damit verbundene Element am zweiten Halteelement anliegt. Sie ist aber lösbar, wenn der Oberlenker oder das damit verbundene Element gegen die Schwerkraft zum ersten Halteelement hin bewegt wurde.

Auf diese Weise müssen zwei Bedingungen erfüllt sein, bevor der Oberlenker abgesenkt wird: der Oberlenker oder das damit verbundene Element muss entgegen der Schwerkraft in Richtung auf das erste Halteelement bewegt worden sein und die Arretierungseinrichtung muss gelöst werden. Erst dann kann der Oberlenker abgesenkt werden. Für diese Aktionen benötigt ein Bediener beide Hände. Da er den Oberlenker gegen die Schwerkraft halten und bewegen muss, bevor er die Arretierungseinrichtung lösen und den Oberlenker absenken kann, ist ein unbeabsichtigtes Herunterfallen des Oberlenkers nicht zu befürchten.

Wenn nicht der Oberlenker selbst, dessen Durchmesser bei hydraulischen Ausführungsformen beispielsweise 120 mm betragen kann, sondern ein damit verbundenes Element an der Anordnung arretiert wird, erreicht man den Vorteil, dass die erfindungsgemäße Anordnung zur Befestigung eines Oberlenkers in seiner Außerbetriebsstellung relativ kleine Abmessungen aufweisen kann, und nicht den Abmessungen des Oberlenkers entsprechen muss. Man erreicht dadurch außerdem, dass der Oberlenker in seiner Außerbetriebsstellung relativ steil (nahezu vertikal) steht, um zu verhindern, dass er in seinem in der Betriebsstellung vorgesehenen vertikalen Bewegungsbereich sich selbst an der Anordnung einfangen kann, was eine Zerstörung oder Beschädigung der Anordnung und/oder des Oberlenkers zur Folge hätte. Ein Wegschwenken der Anordnung in eine unwirksame Stellung, wie sie im eingangs erwähnten Stand der Technik vorgesehen war, erübrigt sich somit.

Bei einer bevorzugten Ausführungsform der Erfindung ist das zweite Halteelement derart ausgebildet, dass die Arretierungseinrichtung nicht gelöst werden kann, solange sich das zweite Halteelement in der Haltestellung befindet. Dadurch vermeidet man ein unbeabsichtigtes oder versehentliches Lösen der Arretierungseinrichtung. Nur wenn der Oberlenker oder das damit verbundene Element sich in der entgegen der Schwerkraft in Richtung auf das erste Halteelement bewegten Stellung befindet, kann das zweite Halteelement in eine Arretierungseinrichtungslösungsstellung verbracht werden, was aber nicht möglich ist, wenn der Oberlenker oder das damit verbundene Element sich durch die Schwerkraft am zweiten Halteelement abstützen und letzteres sich in der Haltestellung befindet. Wenn das zweite Halteelement aus der Haltestellung heraus in die Arretierungseinrichtungslösungsstellung bewegt wurde, kann die Arretierungseinrichtung gelöst werden.

Die Arretierungseinrichtung kann mit einem Arretierungsbereich des zweiten Halteelements zusammenwirken. Der Arretierungsbereich verhindert eine Bewegung der Arretierungseinrichtung aus ihrer Stellung, in der sie das zweite Halteelement am ersten Halteelement arretiert, solange sich das zweite Halteelement in seiner Haltestellung befindet. Ist das zweite Halteelement jedoch in seine Arretierungseinrichtungslösungsstellung bewegt worden, kann die Arretierungseinrichtung in eine inaktive Stellung verbracht werden, so dass danach das zweite Halteelement in seine Lösestellung bewegbar ist.

In einer bevorzugten Ausführungsform umfasst der Arretierungsbereich des zweiten Halteelements eine Einbuchtung mit einer Wand, an der die Arretierungseinrichtung in seiner das zweite Halteelement in der Haltestellung arretierenden Stellung anliegt. In der Arretierungseinrichtungslösungsstellung des zweiten Halteelements ist die Wand der Einbuchtung vom Arretierungseinrichtungselement beabstandet, auch wenn es sich noch in seiner Stellung befindet, in der es zuvor das zweite Halteelement in der Haltestellung arretiert hat.

Die Arretierungseinrichtung kann gegenüber dem ersten Halteelement verschiebbar gelagert sein. Es wäre aber auch denkbar, sie um eine beliebige Achse drehbar daran zu lagern.

Als Arretierungseinrichtung kommt insbesondere ein federnder Stift in Frage, der beispielsweise einen gebogenen, elastischen Bereich umfasst, der sich auf der dem zweiten Halteelement gegenüber liegenden Seite des ersten Halteelements befindet und dort mit diesem verbunden ist. Das zweite Halteelement befindet sich dann zweckmäßigerweise oberhalb des ersten Halteelements, so dass sich der Stift durch eine geeignete Öffnung im ersten Halteelement, zum Beispiel einen Schlitz, nach oben zum zweiten Halteelement erstreckt und durch einen Bediener von oben her bewegt werden kann.

Bei einer anderen Ausführungsform der Erfindung wird die Arretierungseinrichtung durch einen den Oberlenker oder das damit verbundene Element hinter- und/oder umgreifenden Bereich des zweiten Halteelements gebildet. Gegen diesen Bereich wird der Oberlenker oder das damit verbundene Element in seiner Außerbetriebsstellung durch die Schwerkraft in Anlage gehalten, wenn die Halteelemente sich in der Haltestellung befinden. Durch die Positionierung des Oberlenkers oder des damit verbundenen Elements wird der Bereich und mit ihm das zweite Halteelement in der Haltestellung arretiert. Mit anderen Worten: das zweite Halteelement kann nicht in die Lösestellung gelangen, da der Oberlenker oder das damit verbundene Element es geometrisch verhindert. Das zweite Halteelement mit dem die Arretierungseinrichtung bildenden Bereich kann aber aus der Haltestellung in die Lösestellung verbracht werden, wenn der Oberlenker oder das damit verbundene Element gegen die Schwerkraft zum ersten Halteelement hin bewegt ist und die Bewegung des zweiten Halteelements freigibt.

Grundsätzlich kann die Bedienung der erfindungsgemäßen Anordnung von der Rückseite des Nutzfahrzeugs aus erfolgen, was aber erfordert, dass der Bediener von seinem Arbeitsplatz herabsteigen muss. Die Bedienung der Anordnung kann durch eine Fernbedienungseinrichtung vereinfacht werden, die beispielsweise in Form eines starren oder flexiblen Zugmittels, z. B. eines Seils, Kabels, Drahts, Gestänges etc. realisiert werden kann. Die Fernbedienungseinrichtung dient zum Bewegen der Arretierungseinrichtung oder des zweiten Halteelements insbesondere vom Arbeitsplatz des Bedieners des Nutzfahrzeugs aus. Eine weitere, in der hier beschriebenen Form realisierbare Fernbedienungseinrichtung kann zum Anheben des Oberlenkers aus seiner Betriebsstellung in seine Außerbetriebsstellung dienen und außerdem verwendet werden, um den Oberlenker vom zweiten Halteelement fort zum ersten Halteelement hin zu bewegen, und ihn auch wieder in die Betriebsstellung abzusenken. Die erfindungsgemäße Anordnung ist somit vom Arbeitsplatz des Bedieners fernbedienbar, so dass sich ein Absteigen erübrigt. Befindet sich der Arbeitsplatz in einer Kabine, kann es erforderlich werden, ein rückwärtiges Fenster zu öffnen.

Die Bedienung der erfindungsgemäßen Anordnung kann erleichtert werden, wenn das zweite Halteelement durch eine Bewegung des Oberlenkers oder des damit verbundenen Elements vom zweiten Halteelement fort und auf das erste Halteelement hin aus der Haltestellung in die Arretierungseinrichtungslösungsstellung bringbar ist. Das zweite Halteelement wird demnach durch den Oberlenker oder das damit verbundene Element in die Arretierungseinrichtungslösungsstellung bewegt. Dadurch erübrigen sich für den Bediener ein weiterer Handgriff und eine dritte Fernbedienungseinrichtung. Es wäre auch denkbar, das zweite Halterungselement durch eine Bewegung der Arretierungseinrichtung aus der Haltestellung in die Arretierungseinrichtungslösungsstellung zu verbringen, was aber mit einem höheren Kraftaufwand für die Bewegung der Arretierungseinrichtung verbunden wäre.

Die Drehrichtung, in der das zweite Halteelement in die Arretierungseinrichtungslösungsstellung verbringbar ist, entspricht dem Drehsinn, in dem das zweite Halteelement von der Lösestellung in die Haltestellung bringbar ist. Das zweite Halteelement wird demnach aus der Lösestellung über die Haltestellung hinaus in die Arretierungseinrichtungslösungsstellung bewegt.

In einer bevorzugten Ausführungsform verrastet der Oberlenker oder das damit verbundene Element selbsttätig an der erfindungsgemäßen Anordnung, wenn er in seine Außerbetriebsstellung verbracht wird. Das kann durch eine Form des zweiten Halterungselements erreicht werden, die beim Annähern des Oberlenkers oder des damit verbundenen Elements den Oberlenker oder das damit verbundene Element in einer Einbuchtung aufnimmt. Danach dreht der Oberlenker oder das damit verbundene Element das zweite Halteelement in die Haltestellung, in der die Arretierungseinrichtung dann selbsttätig verrastet.

Die erfindungsgemäße Anordnung eignet sich für alle Typen landwirtschaftlicher Nutzfahrzeuge mit Dreipunktanbaueinrichtungen mit hydraulischen oder mechanischen Oberlenkern, z. B. Traktoren.

### Ausführungsbeispiele

In den Zeichnungen sind zwei nachfolgend näher beschriebene Ausführungsbeispiele der Erfindung dargestellt. Es zeigt:
- Figur 1: eine seitliche Ansicht eines landwirtschaftlichen Nutzfahrzeugs mit einer Dreipunktanbaueinrichtung,
- Figur 2: eine perspektivische, rückwärtige Ansicht einer Anordnung zum Befestigen des Oberlenkers der Dreipunktanbaueinrichtung in seiner Außerbetriebsstellung in einer Position, in der sie zur Aufnahme eines mit dem Oberlenker verbundenen Elements bereit ist,
- Figur 3: eine seitliche perspektivische Ansicht der Anordnung aus Figur 2 mit einem mit dem Oberlenker verbundenen Element, das an der Anordnung befestigt und arretiert ist,
- Figur 4: eine Draufsicht auf eine zweite Ausführungsform einer Anordnung zum Befestigen des Oberlenkers der Dreipunktanbaueinrichtung in seiner Außerbetriebsstellung in ihrer Haltestellung.

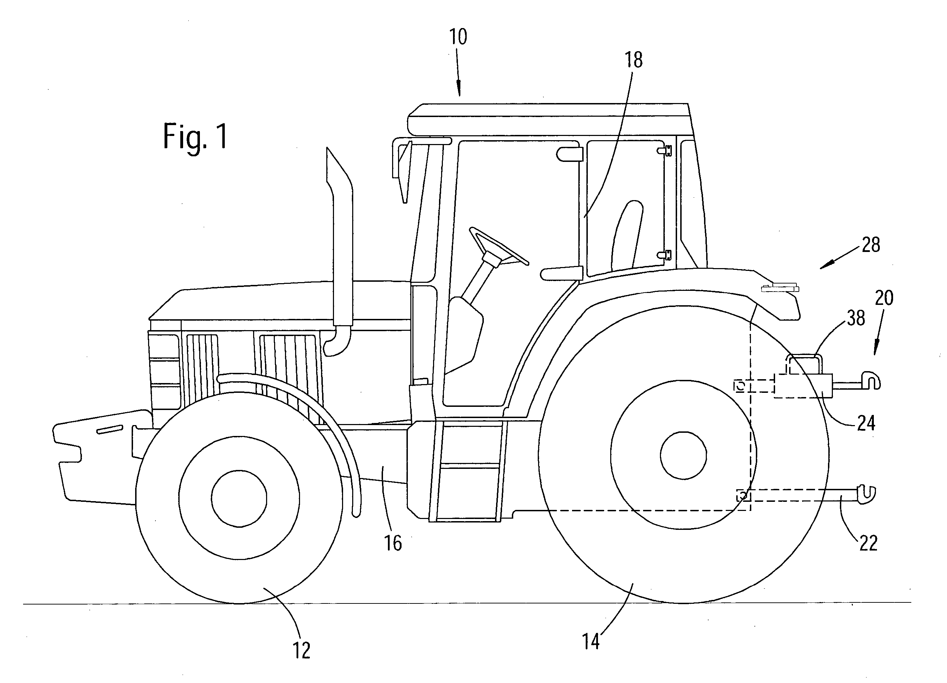

In der Figur 1 ist ein landwirtschaftliches Nutzfahrzeug 10 in Form eines Traktors 10 dargestellt, das einen sich auf vorderen, lenkbaren Rädern 12 und hinteren, antreibbaren Rädern 14 abstützenden Rahmen 16 umfasst, der eine Kabine 18 mit einem darin angeordneten Bedienerarbeitsplatz trägt. An der Rückseite des Rahmens 16 (oder einem damit verbundenen Anbauelement) ist eine Dreipunktanbaueinrichtung mit zwei Unterlenkern 22 (von denen nur einer zu sehen ist) und einem darüber angebrachten, hydraulischen Oberlenker 24 befestigt. Der Oberlenker 24 enthält zur Längenverstellung einen Hydraulikzylinder und ist um eine horizontal und quer zur Vorwärtsrichtung des Nutzfahrzeugs 10 verlaufende Achse 26 schwenkbar mit dem Rahmen 16 (oder dem damit verbundenen Anbauelement) verbunden. Um den Oberlenker 24 im Falle des Nichtgebrauchs dauerhaft und stabil in einer gegenüber der in Figur 1 gezeigten Betriebsstellung möglichst weit (in die Vertikale verschwenkten Außerbetriebsstellung) festhalten zu können, ist eine Anordnung 28 zum Befestigen des Oberlenkers 24 der Dreipunktanbaueinrichtung 20 in seiner Außerbetriebsstellung vorgesehen, die ebenfalls direkt oder indirekt am Rahmen 16 (oder dem damit verbundenen Anbauelement) befestigt ist. An der Oberseite des Oberlenkers 24 ist ein U-förmiges Element 38 angebracht, das mit der Anordnung 28 zusammenwirkt.

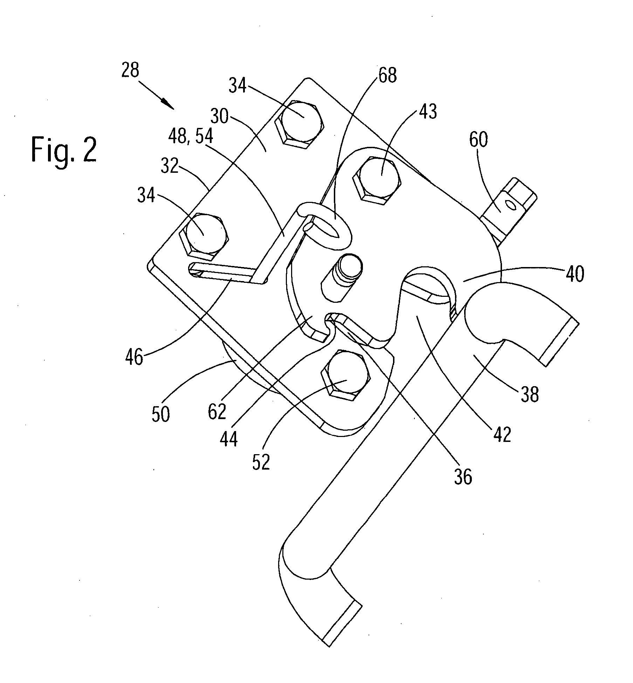

Die Figur 2 zeigt die Anordnung 28 in einer perspektivischen Ansicht, gegenüber dem Traktor 10 aus Figur 1 von hinten und schräg oben betrachtet. Die Anordnung 28 umfasst ein plattenförmiges erstes Halteelement 30, dessen in Figur 2 hinten eingezeichnete Fläche 32 sich horizontal und quer zur Fahrtrichtung des Nutzfahrzeugs 10 erstreckt und dem Rahmen 16 zugewandt ist. Das erste Halteelement 30 ist in einer horizontalen Ebene angeordnet und durch Schrauben 34 und zugehörige Muttern oder Gewindelöcher mit einer mit dem Rahmen 16 (oder dem damit verbundenen Anbauelement) verbundenen Konsole oder anderen geeigneten Halterung (nicht gezeigt) gekoppelt. An seiner dem Rahmen 16 abgewandten Seite ist das erste Haltelement 30 mit einer schlitzförmigen, ersten Einbuchtung 36 ausgestattet, in die das Element 38 hineinpasst.

Ein zweites, ebenfalls plattenförmiges Halteelement 40, das sich ebenfalls in einer horizontalen Ebene erstreckt, ist durch eine Schraube 43 um eine sich vertikal erstreckende Achse an dem ersten Halteelement 30 schwenkbar angelenkt. Das zweite Halteelement 40 ist vorzugsweise durch eine Feder (nicht gezeigt) im Gegenuhrzeigersinn vorgespannt. Das zweite Halteelement 40 umfasst eine zweite schlitzförmige Einbuchtung 42, deren seitlichen Abmessungen etwas größer als der Durchmesser des Elements 38 sind, und eine demgegenüber kleinere, dritte Einbuchtung 44.

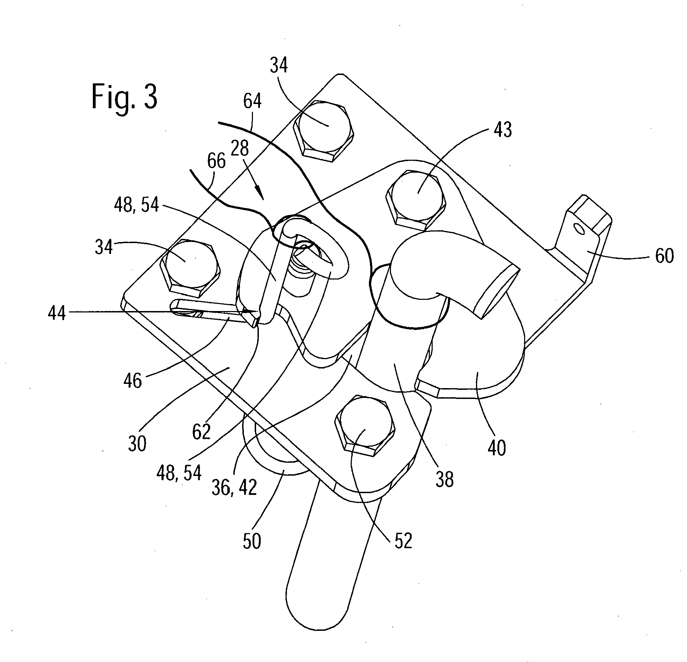

Das erste Halteelement 30 umfasst einen Schlitz 46, durch den sich ein als Arretierungseinrichtung 54 dienender, federnder Stift 48 erstreckt. Der Stift 48 weist unterhalb des ersten Halteelements einen gebogenen Bereich 50 auf, der die Elastizität des Stifts 48 herstellt, und der in eine Öse ausläuft, an der der Stift 48 mittels einer weiteren Schraube 52 und Mutter an dem ersten Halteelement 30 befestigt ist. Der Stift 48 ist entlang des Schlitzes 46 beweglich und kann in die dritte Einbuchtung 44 eindringen, wenn das zweite Halteelement 40 sich in einer Haltestellung befindet, und das zweite Halteelement 40 arretieren, wie in der Figur 3 dargestellt.

Die Funktionsweise der Anordnung 28 ist folgendermaßen. Solange sich der Oberlenker 24 in seiner Betriebsstellung befindet (Figur 1), liegt das zweite Halteelement 40 in der in Figur 2 dargestellten Lösestellung, weil der Stift 48 verhindert, dass sich das zweite Halteelement 40 im Uhrzeigersinn (d. h. in Vorwärtsrichtung des Nutzfahrzeugs 10 nach vorn) dreht, und ein Anschlag 60 des ersten Halteelements 30 verhindert, dass es sich im Gegenuhrzeigersinn dreht, und die oben erwähnte Feder (nicht gezeigt) es im Gegenuhrzeigersinn vorspannt und gegen den Anschlag 60 zieht. Wird nun der Oberlenker 24 durch einen Bediener in seine Außerbetriebsstellung angehoben, gelang das Element 38 zunächst in die erste Einbuchtung 36 und gerät bald danach an die nach hinten gewandte Außenwand der zweiten Einbuchtung 42. Durch den Kontakt bewegt sich das zweite Halteelement 40 im Uhrzeigersinn und das Element 38 dringt in die erste Einbuchtung 36 ein. Ein nasenförmiger, der dritten Einbuchtung 44 benachbarter Bereich 62 des zweiten Halteelements 40 bewegt dann den Stift 48 im Schlitz 46 nach vom, so dass dieser um den Bereich 62 umläuft. Wenn der Stift 48 wieder nach hinten springt und sich in der dritten Einbuchtung 44 befindet, so dass er das zweite Halteelement 40 am ersten Halteelement 30 arretiert, umschließen die Einbuchtungen 36, 42 das Element 38, so dass der Oberlenker 24 sicher in der Außerbetriebsstellung arretiert ist. Das zweite Halteelement 40 befindet sich dann in der in Figur 3 gezeigten Haltestellung. In der Haltestellung (Figur 3) ist der Stift 48 nicht bewegbar.

Soll die Arretierungseinrichtung wieder gelöst werden, bewegt der Bediener das Element 38 oder den Oberlenker 24 entgegen der Schwerkraft in Vorwärtsrichtung des Nutzfahrzeugs 10 nach vorn. Dadurch bewegt sich auch das zweite Halteelement 40 im Uhrzeigersinn in eine Arretierungseinrichtungslösungsstellung, in der der Stift 48 nicht mehr an der Wand der dritten Einbuchtung 44 anliegt und frei bewegbar ist. Der Bediener kann dann den Stift 48 im Schlitz entgegen der Vorwärtsrichtung des Nutzfahrzeugs 10 nach vom bewegen, so dass jegliches Zusammenwirken zwischen dem Stift 48 und dem zweiten Halteelement 40 unterbunden ist. Der Bediener kann dann den Oberlenker 24 in die Betriebsstellung (Figur 1) absenken, da das zweite Halteelement 40 frei drehbar ist. Da der Bediener den Oberlenker 24 bzw. das Element 38 entgegen die Schwerkraft bewegen und festhalten muss, bevor der Stift 48 in eine nicht mehr arretierende Stellung gebracht werden kann, wozu beide Hände des Bedieners einzusetzen sind, ist die Unfallgefahr durch einen versehentlich herunterfallenden Oberlenker verringert.

Um das Festlegen und Lösen des Oberlenkers 24 an und von der Anordnung 28 aus der Kabine 18 bewerkstelligen zu können, können flexible Zugmittel 64, 66 am Element 38 und an einer oberen Öse 68 des Stifts 48 angebracht werden. Der Bediener kann den beschriebenen Vorgang mittels der Zugmittel 64, 66 aus der Kabine 18 vornehmen.

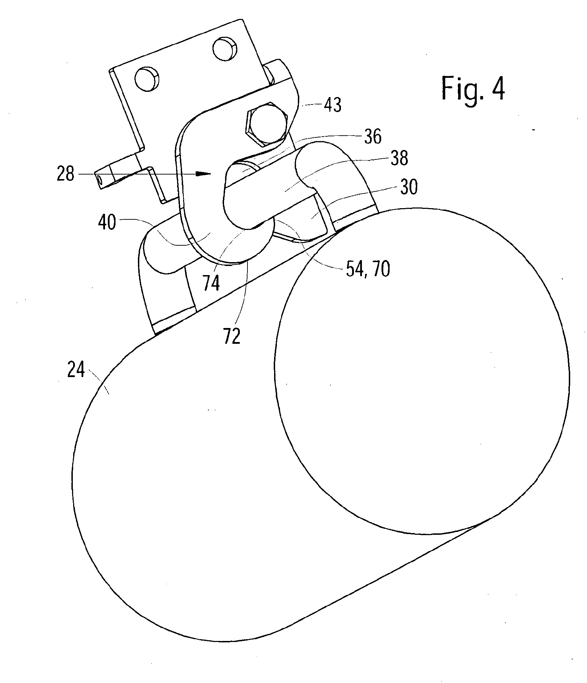

Die Figur 4 zeigt eine zweite Ausführungsform einer Anordnung 28 zum Befestigen des Oberlenkers 24 der Dreipunktanbaueinrichtung 20 in seiner Außerbetriebsstellung in ihrer Haltestellung. Die Anordnung 28 umfasst ebenfalls ein erstes Halteelement 30 mit einer langgestreckten Einbuchtung 36, die sich entgegen der Fahrtrichtung des Nutzfahrzeugs 10 nach hinten öffnet. Um eine sich vertikal erstreckende Achse ist mittels einer Schraube 43 ein zweites Halteelement 40 am ersten Halteelement 30 schwenkbar angelenkt. Das zweite Halteelement 40 ist an seiner Rückseite hakenförmig geformt und umfasst einen die Arretierungseinrichtung 54 bildenden Bereich 70, der die Einbuchtung 36 und das darin angeordnete, mit dem Oberlenker 24 verbundene Element 38 hintergreift. Das zweite Halteelement 40 kann, muss aber nicht, durch die Spannung einer Feder (nicht gezeigt), die es im Gegenuhrzeigersinn vorspannt, in die dargestellte Haltestellung vorgespannt sein.

Die Funktionsweise der zweiten Ausführungsform ist folgendermaßen. Wenn der Oberlenker 24 aus seiner Betriebsstellung (s. Figur 1) in die Außerbetriebsstellung verschwenkt wird, bewegt das Element 38 die bogenförmig gekrümmte Rückseite 72 des zweiten Halteelements 40 nach links (in der Figur 4 nach unten) und gelangt in die Einbuchtung 36 des ersten Halteelements 30. Das zweite Halteelement 40 kann durch Federkraft, wenn vorhanden, oder von Hand in die in Figur 4 gezeigte Haltestellung verbracht werden. Wird dann der Oberlenker 24 bzw. das Element 38 losgelassen, liegt er durch die Schwerkraft an der gekrümmten Vorderseite 74 des zweiten Halteelements 40 an. In der in Figur 4 gezeigten Position wird das Element 38 durch die Schwerkraft gehalten und gegen die Bereiche 70, 74 des zweiten Halteelements 40 gedrückt. Der die Arretierungseinrichtung 54 bildende Bereich 70 umschließt das Element 38 teilweise und arretiert das zweite Halteelement 40, da es wegen des Elements 38 nicht um die Achse der Schraube 43 gedreht werden kann. Der Oberlenker 24 ist in seiner Außerbetriebsstellung arretiert.

Wird der Oberlenker 24 bzw. das Element 38 zum Lösen durch einen Bediener innerhalb der Einbuchtung 36 gegen die Schwerkraft nach vorn (in Figur 4 nach links) bewegt, gibt das Element 38 den Schwenkweg des zweiten Halteelements 40 frei, so dass letzteres von Hand um etwa 30° im Uhrzeigersinn in eine Lösestellung gedreht werden kann. Der Oberlenker 24 kann dann schließlich in seine Betriebsstellung nach unten verschwenkt werden. Da eine zweihändige Bedienung zur Bewegung des Oberlenkers 24 und des zweiten Halteelements 40 erforderlich ist, sind Unfälle durch versehentliches Herabfallenlassen des Oberlenkers 24 unwahrscheinlich.

Wie bei der ersten Ausführungsform können der Oberlenker 24 oder das Element 38 einerseits und das zweite Halteelement 40 andererseits mit flexiblen Zugmitteln versehen werden, um ihre Bewegung von der Kabine 18 aus zu ermöglichen.

## Patentansprüche

1. Anordnung (28) zur Befestigung eines Oberlenkers (24) einer Dreipunktanbaueinrichtung (20) für landwirtschaftliche Nutzfahrzeuge (10) in einer Außerbetriebsstellung, mit:
einem ersten Halteelement (30)
und einem zweiten Halteelement (40), das um eine Achse (42) schwenkbar am ersten Element (30) angelenkt ist und in eine Haltestellung, in der die Halteelemente (30, 40) einen Oberlenker (24) oder ein damit verbundenes Element (38) festhalten können, und in eine Lösestellung bringbar ist, in der das zweite Halteelement (40) eine Bewegung des Oberlenkers (24) oder des damit verbundenen Elements (38) von der Anordnung (28) hinweg und zu ihr hin ermöglicht, wobei
eine lösbare Arretierungseinrichtung (54) vorhanden ist, die das zweite Halteelement (40) in der Haltestellung am ersten Halteelement (30) arretieren kann, **dadurch gekennzeichnet, dass**
der Oberlenker (24) oder das damit verbundene Element (38) bei in der Haltestellung befindlichen Halteelementen (30, 40) gegen die Schwerkraft auf das erste Halteelement (30) hin bewegbar ist,
und dass die Arretierungseinrichtung (54) nicht lösbar ist, wenn der Oberlenker (24) oder das damit verbundene Element (38) am zweiten Halteelement (40) anliegt, aber lösbar ist, wenn der Oberlenker (24) oder das damit verbundene Element (38) gegen die Schwerkraft auf das erste Halteelement (30) hin bewegt ist.

2. Anordnung nach Anspruch 1, **dadurch gekennzeichnet, dass** das zweite Halteelement (40) nur dann aus der Haltestellung heraus in eine Arretierungseinrichtungslösungsstellung verbringbar ist, wenn der Oberlenker (24) oder das damit verbundene Element (38) gegen die Schwerkraft auf das erste Halteelement (30) hin bewegt wurde, und dass die Arretierungseinrichtung (54) nicht lösbar ist, wenn das zweite Halteelement (40) sich in der Haltestellung befindet, aber lösbar ist, wenn sich das zweite Halteelement (40) in der Arretierungseinrichtungslösungsstellung befindet.

3. Anordnung (28) nach Anspruch 2, **dadurch gekennzeichnet, dass** die Arretierungseinrichtung (54) mit einem Arretierungsbereich des zweiten Halteelements (40) zusammenwirkt, der eine Bewegung der Arretierungseinrichtung (54) aus ihrer das zweite Halteelement (40) arretierenden Stellung verhindert, solange das zweite Halteelement (40) sich in der Haltestellung befindet, aber eine Bewegung der Arretierungseinrichtung (54) vom Arretierungsbereich hinweg erlaubt, wenn das zweite Halteelement (40) sich der Arretierungseinrichtungslösungsstellung befindet.

4. Anordnung (28) nach Anspruch 3, **dadurch gekennzeichnet, dass** der Arretierungsbereich des zweiten Halteelements (40) eine Einbuchtung (44) umfasst, an deren Wand das Arretierungseinrichtungselement (54) anliegt, wenn sich das zweite Halteelement (40) in der Haltestellung befindet und durch das Arretierungseinrichtungselement (54) arretiert ist, und die in der Arretierungseinrichtungslösungsstellung des zweiten Halteelements (40) vom Arretierungseinrichtungselement (54) beabstandet ist.

5. Anordnung (28) nach einem der Ansprüche 1 bis 4, **dadurch gekennzeichnet, dass** die Arretierungseinrichtung (54) am ersten Halteelement (30) verschiebbar gelagert ist.

6. Anordnung (28) nach einem der Ansprüche 1 bis 5, **dadurch gekennzeichnet, dass** die Arretierungseinrichtung (54) einen federnden Stift (48) umfasst.

7. Anordnung (28) nach Anspruch 6, **dadurch gekennzeichnet, dass** der federnde Stift (48) einen elastischen, gebogenen, am ersten Halteelement (30) befestigten Bereich (50) umfasst, der sich auf der dem zweiten Halteelement (40) gegenüber liegenden Seite des ersten Halteelements (30) befindet und dort damit verbunden ist, wobei ein Ende des Stifts (48) sich durch eine Öffnung, insbesondere einen Schlitz (46), des ersten Halteelements (30) erstreckt und mit dem zweiten Halteelement (40) zusammenwirkt.

8. Anordnung (28) nach Anspruch 1, **dadurch gekennzeichnet, dass** die Arretierungseinrichtung (54) durch einen den Oberlenker (24) oder das damit verbundene Element (38) umgreifenden Bereich (70) des zweiten Halteelements (40) gebildet wird, gegen den der Oberlenker (24) oder das damit verbundene Element (38) in seiner Außerbetriebsstellung bei in der Haltestellung befindlichen Halteelementen (30, 40) durch die Schwerkraft in Anlage kommt, wodurch der Bereich (70) arretiert wird, und dass das zweite Halteelement (40) mit dem Bereich (70) aus der Haltestellung in die Lösestellung bringbar ist, wenn der Oberlenker (24) oder das damit verbundene Element (38) gegen die Schwerkraft zum ersten Halteelement (30) hin bewegt ist.

9. Anordnung (28) nach einem der Ansprüche 1 bis 8, **dadurch gekennzeichnet, dass** die Arretierungseinrichtung (54) und/oder das zweite Halteelement (40) und/oder der Oberlenker (24) von einem Bedienerarbeitsplatz des Nutzfahrzeugs (10) aus fernbedienbar ist, beispielsweise mittels eines flexiblen Zugmittels (64, 66).

10. Anordnung (28) nach einem der Ansprüche 2 bis 9, **dadurch gekennzeichnet, dass** das zweite Halteelement (40) durch eine Bewegung des Oberlenkers (24) oder des damit verbundenen Elements (38) zum ersten Halteelement (30) hin aus der Haltestellung in die Arretierungseinrichtungslösungsstellung bringbar ist.

11. Anordnung (28) nach einem der Ansprüche 2 bis 10, **dadurch gekennzeichnet, dass** das zweite Halteelement (40) aus der Haltestellung in dem Drehsinn in die Arretierungseinrichtungslösungsstellung verbringbar ist, in dem das zweite Halteelement (40) aus der Lösestellung in die Haltestellung bringbar ist.

12. Anordnung (28) nach einem der Ansprüche 1 bis 10, **dadurch gekennzeichnet, dass** das zweite Halteelement (40) derart geformt ist, dass der Oberlenker (24) oder das damit verbundene Element (38) beim Verbringen in die Außerbetriebsstellung das zweite Halteelement (40) in die Haltestellung bewegt, und dass die Arretierungseinrichtung (54) dann selbsttätig mit dem zweiten Halteelement (40) verrastet.

13. Landwirtschaftliches Nutzfahrzeug (10) mit einem Rahmen (16) und einem daran um eine horizontale und quer zur Vorwärtsrichtung verlaufende Achse (26) schwenkbar angelenkten mechanischen oder hydraulischen Oberlenker (24), der durch eine Anordnung (28) nach einem der Ansprüche 1 bis 12 in einer Außerbetriebsstellung befestigbar oder befestigt ist.

## Claims

1. Arrangement (28) for fastening an upper steering arm (24) of a three-point attaching device (20) for agricultural utility vehicles (10) in an inoperative position, comprising:
a first retaining element (30)
and a second retaining element (40), which is pivotably articulated on the first element (30) about an axis (42) and may be moved into a retaining position in which the retaining elements (30, 40) may secure an upper steering arm (24) or an element (38) connected thereto and into a release position, in which the second retaining element (40) allows a movement of the upper steering arm (24) or the element (38) connected thereto away from the arrangement (28) and towards said arrangement,
a releasable locking device (54) being present which is able to lock the second retaining element (40) in the retaining position on the first retaining element (30),
**characterized in that** the upper steering arm (24) or the element (38) connected thereto may be moved counter to the force of gravity towards the first retaining element (30) when the retaining elements (30, 40) are located in the retaining position,
and **in that** the locking device (54) is not releasable when the upper steering arm (24) or the element (38) connected thereto bears against the second retaining element (40) but is releasable when the upper steering arm (24) or the element (38) connected thereto is moved counter to the force of gravity towards the first retaining element (30).

2. Arrangement according to Claim 1, **characterized in that** the second retaining element (40) may only be moved from the retaining position into a locking device release position when the upper steering arm (24) or the element (38) connected thereto has been moved counter to the force of gravity towards the first retaining element (30), and **in that** the locking device (54) is not releasable when the second retaining element (40) is located in the retaining position but is releasable when the second retaining element (40) is located in the locking device release position.

3. Arrangement (28) according to Claim 2, **characterized in that** the locking device (54) cooperates with a locking region of the second retaining element (40), which prevents a movement of the locking device (54) from the position thereof locking the second retaining element (40), provided that the second retaining element (40) is in the retaining position, but allows a movement of the locking device (54) away from the locking region when the second retaining element (40) is located in the locking device release position.

4. Arrangement (28) according to Claim 3, **characterized in that** the locking region of the second retaining element (40) comprises a recess (44) against the wall of which the locking device element (54) bears when the second retaining element (40) is located in the retaining position and is locked by the locking device element (54) and which is spaced apart from the locking device element (54) in the locking device release position of the second retaining element (40).

5. Arrangement (28) according to one of Claims 1 to 4, **characterized in that** the locking device (54) is displaceably mounted on the first retaining element (30).

6. Arrangement (28) according to one of Claims 1 to 5, **characterized in that** the locking device (54) comprises a resilient pin (48).

7. Arrangement (28) according to Claim 6, **characterized in that** the resilient pin (48) comprises a resilient curved region (50) fastened to the first retaining element (30), which is located on the side of the first retaining element (30) located opposite the second retaining element (40) and is connected thereto at that point, one end of the pin (48) extending through an aperture, in particular a slot (46), of the first retaining element (30) and cooperating with the second retaining element (40).

8. Arrangement (28) according to Claim 1, **characterized in that** the locking device (54) is formed by a region (70) of the second retaining element (40) engaging around the upper steering arm (24) or the element (38) connected thereto, against which the upper steering arm (24) or the element (38) connected thereto bears in the inoperative position thereof as a result of the force of gravity when the retaining elements (30, 40) are in the retaining position, whereby the region (70) is locked, and **in that** the second retaining element (40) together with the region (70) may be moved from the retaining position into the release position when the upper steering arm (24) or the element (38) connected thereto is moved counter to the force of gravity towards the first retaining element (30).

9. Arrangement (28) according to one of Claims 1 to 8, **characterized in that** the locking device (54) and/or the second retaining element (40) and/or the upper steering arm (24) may be remotely operated from a working position of an operator of the utility vehicle (10), for example by means of a flexible tractive means (64, 66).

10. Arrangement (28) according to one of Claims 2 to 9, **characterized in that** the second retaining element (40) may be moved by a movement of the upper steering arm (24) or the element (38) connected thereto towards the first retaining element (30) from the retaining position into the locking device release position.

11. Arrangement (28) according to one of Claims 2 to 10, **characterized in that** the second retaining element (40) may be moved from the retaining position in the rotational direction into the locking device release position in which the second retaining element (40) may be moved from the release position into the retaining position.

12. Arrangement (28) according to one of Claims 1 to 10, **characterized in that** the second retaining element (40) is formed such that the upper steering arm (24) or the element (38) connected thereto moves the second retaining element (40) into the retaining position when moved into the inoperative position and **in that** the locking device (54) is then automatically latched with the second retaining element (40).

13. Agricultural utility vehicle (10) comprising a frame (16) and a mechanical or hydraulic upper steering arm (24) which is pivotably articulated thereon about a horizontal axis (26) extending transversely to the forward direction and which may be fastened or is fastened by an arrangement (28) according to one of Claims 1 to 12, in an inoperative position.

## Revendications

1. Agencement (28) pour la fixation d'un bras oscillant supérieur (24) d'un dispositif d'attelage à trois points (20) pour des véhicules utilitaires agricoles (10) dans une position hors service, comprenant :
un premier élément de retenue (30),
et un deuxième élément de retenue (40) qui est articulé au premier élément (30) de manière à pouvoir pivoter autour d'un axe (42) et qui peut être amené dans une position de retenue dans laquelle les éléments de retenue (30, 40) peuvent fixer un bras oscillant supérieur (24) ou un élément connecté à celui-ci (38), et dans une position de libération dans laquelle le deuxième élément de retenue (40) permet un mouvement du bras oscillant supérieur (24) ou de l'élément connecté à celui-ci (38) à l'écart de l'agencement (28) et vers celui-ci,
un dispositif de blocage amovible (54) étant prévu, lequel peut bloquer le deuxième élément de retenue (40) dans la position de retenue sur le premier élément de retenue (30), **caractérisé en ce que**
le bras oscillant supérieur (24) ou l'élément connecté à celui-ci (38), lorsque les éléments de retenue (30, 40) se trouvent dans la position de retenue, peut être déplacé à l'encontre de la force de pesanteur vers le premier élément de retenue (30),
et **en ce que** le dispositif de blocage (54) n'est pas amovible lorsque le bras oscillant supérieur (24) ou l'élément connecté à celui-ci (38) s'applique contre le deuxième élément de retenue (40), mais est amovible lorsque le bras oscillant supérieur (24) ou l'élément connecté à celui-ci (38) est déplacé à l'encontre de la force de pesanteur vers le premier élément de retenue (30).

2. Agencement selon la revendication 1, **caractérisé en ce que** le deuxième élément de retenue (40) peut être amené dans une position de libération du dispositif de blocage hors de la position de retenue seulement lorsque le bras oscillant supérieur (24) ou l'élément connecté à celui-ci (38) a été déplacé à l'encontre de la force de pesanteur vers le premier élément de retenue (30), et **en ce que** le dispositif de blocage (54) n'est pas amovible lorsque le deuxième élément de retenue (40) se trouve dans la position de retenue, mais est amovible lorsque le deuxième élément de retenue (40) se trouve dans la position de libération du dispositif de blocage.

3. Agencement (28) selon la revendication 2, **caractérisé en ce que** le dispositif de blocage (54) coopère avec une région de blocage du deuxième élément de retenue (40) qui empêche un mouvement du dispositif de blocage (54) hors de sa position bloquant le deuxième élément de retenue (40) tant que le deuxième élément de retenue (40) se trouve dans la position de retenue, mais permet un mouvement du dispositif de blocage (54) à l'écart de la région de blocage lorsque le deuxième élément de retenue (40) se trouve dans la position de libération du dispositif de blocage.

4. Agencement (28) selon la revendication 3, **caractérisé en ce que** la région de blocage du deuxième élément de retenue (40) comprend un renfoncement (44) au niveau de la paroi duquel s'applique l'élément de dispositif de blocage (54), lorsque le deuxième élément de retenue (40) se trouve dans la position de retenue et est bloqué par l'élément de dispositif de blocage (54), et qui est espacé de l'élément de dispositif de blocage (54) dans la position de libération du dispositif de blocage du deuxième élément de retenue (40).

5. Agencement (28) selon l'une quelconque des revendications 1 à 4, **caractérisé en ce que** le dispositif de blocage (54) est supporté de manière déplaçable sur le premier élément de retenue (30).

6. Agencement (28) selon l'une quelconque des revendications 1 à 5, **caractérisé en ce que** le dispositif de blocage (54) comprend une goupille à ressort (48).

7. Agencement (28) selon la revendication 6, **caractérisé en ce que** la goupille à ressort (48) comprend une région élastique cintrée (50), fixée sur le premier élément de retenue (30), laquelle se trouve sur le côté du premier élément de retenue (30) opposé au deuxième élément de retenue (40) et est connectée à celui-ci à cet endroit, une extrémité de la goupille (48) s'étendant à travers une ouverture, en particulier une fente (46), du premier élément de retenue (30) et coopérant avec le deuxième élément de retenue (40).

8. Agencement (28) selon la revendication 1, **caractérisé en ce que** le dispositif de blocage (54) est formé par une région (70) du deuxième élément de retenue (40) venant en prise autour du bras oscillant supérieur (24) ou de l'élément connecté à celui-ci (38), contre laquelle le bras oscillant supérieur (24) ou l'élément connecté à celui-ci (38) vient en appui sous l'effet de la force de pesanteur dans sa position hors service lorsque les éléments de retenue (30, 40) se trouvent dans la position de retenue, de sorte que la région (70) est bloquée, et **en ce que** le deuxième élément de retenue (40) peut être amené avec la région (70) de la position de retenue dans la position de libération, lorsque le bras oscillant supérieur (24) ou l'élément connecté à celui-ci (38) est déplacé à l'encontre de la force de pesanteur vers le premier élément de retenue (30).

9. Agencement (28) selon l'une quelconque des revendications 1 à 8, **caractérisé en ce que** le dispositif de blocage (54) et/ou le deuxième élément de retenue (40) et/ou le bras oscillant supérieur (24) peuvent être commandés à distance depuis un poste de travail de commande du véhicule utilitaire (10), par exemple par le biais d'un moyen de traction flexible (64, 66).

10. Agencement (28) selon l'une quelconque des revendications 2 à 9, **caractérisé en ce que** le deuxième élément de retenue (40) peut être amené de la position de retenue dans la position de libération du dispositif de blocage par un mouvement du bras oscillant supérieur (24) ou de l'élément connecté à celui-ci (38) vers le premier élément de retenue (30).

11. Agencement (28) selon l'une quelconque des revendications 2 à 10, **caractérisé en ce que** le deuxième élément de retenue (40) peut être amené de la position de retenue dans la position de libération du dispositif de blocage dans le sens de rotation dans lequel le deuxième élément de retenue (40) peut être amené de la position de libération dans la position de retenue.

12. Agencement (28) selon l'une quelconque des revendications 1 à 10, **caractérisé en ce que** le deuxième élément de retenue (40) est formé de telle sorte que le bras oscillant supérieur (24) ou l'élément connecté à celui-ci (38) se déplace dans la position de retenue lorsque le deuxième élément de retenue (40) est amené dans la position hors service, et **en ce que** le dispositif de blocage (54) s'encliquète alors automatiquement avec le deuxième élément de retenue (40).

13. Véhicule utilitaire agricole (10) comprenant un châssis (16) et un bras oscillant supérieur (24) mécanique ou hydraulique articulé sur celui-ci de manière à pouvoir pivoter autour d'un axe (26) horizontal et s'étendant transversalement à la direction d'avance, lequel bras oscillant supérieur peut être fixé ou est fixé dans une position hors service par un agencement (28) selon l'une quelconque des revendications 1 à 12.
